(19) Europäisches Patentamt
European Patent Office
Office européen des brevets

(11) EP 3 697 826 B1

(12) FASCICULE DE BREVET EUROPEEN

(45) Date de publication et mention de la délivrance du brevet:
**01.12.2021 Bulletin 2021/48**

(51) Int Cl.:
***C08F 295/00*** (2006.01) ***C08F 297/06*** (2006.01)
***C08F 4/52*** (2006.01)

(21) Numéro de dépôt: **18799583.2**

(22) Date de dépôt: **11.10.2018**

(86) Numéro de dépôt international:
**PCT/FR2018/052522**

(87) Numéro de publication internationale:
**WO 2019/077232 (25.04.2019 Gazette 2019/17)**

# (54) PROCEDE DE SYNTHESE DE POLYMERES BLOCS

VERFAHREN ZUR SYNTHESE VON POLYMERBLÖCKEN

METHOD FOR SYNTHESISING POLYMER BLOCKS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.10.2017 FR 1759834**

(43) Date de publication de la demande:
**26.08.2020 Bulletin 2020/35**

(73) Titulaire: **Compagnie Générale des Etablissements Michelin**
**63000 Clermont-Ferrand (FR)**

(72) Inventeurs:
- **JEAN-BAPTISTE-DIT-DOMINIQUE, François**
  **63040 Clermont-Ferrand Cedex 9 (FR)**
- **LAFAQUIERE, Vincent**
  **63040 Clermont-Ferrand Cedex 9 (FR)**

(74) Mandataire: **Gandon-Pain, Sylvie**
**Manufacture Française des Pneumatiques Michelin**
**CBS/CORP/J/PI - F35 - Ladoux**
**23, place des Carmes-Déchaux**
**63040 Clermont-Ferrand Cedex 9 (FR)**

(56) Documents cités:
**WO-A1-01/49764 WO-A2-2007/054224**
**US-A- 4 480 075**

- **THOMAS CHENAL AND MARC VISSEAUX: "Combining Polyethylene CCG and Stereoregular Isoprene Polymerization: First Synthesis of Poly(ethylene)-b-(trans-isoprene) by Neodymium Catalyzed Sequenced Copolymerization", MACROMOLECULES, AMERICAN CHEMICAL SOCIETY, US, vol. 45, no. 14, 24 juillet 2012 (2012-07-24), pages 5718-5727, XP001577202, ISSN: 0024-9297, DOI: 10.1021/MA3005185 [extrait le 2012-07-03]**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

**Description**

La présente invention concerne le domaine des procédés de synthèse de polymères blocs obtenus par polymérisation d'oléfines.

Plusieurs voies de synthèse peuvent être répertoriées pour la synthèse de polymères blocs contenant des unités monomères d'oléfines telles que des diènes, l'éthylène et des $\alpha$-oléfines

Une des voies repose sur la polymérisation subséquente de monomères différents en utilisant le même système de polymérisation. Par exemple, les documents EP 2 599 804 et EP 2599 809 décrivent la synthèse de copolymères blocs de diène conjugué et d'une oléfine non conjuguée à partir d'un même système catalytique comprenant un amidure de métallocène. La synthèse de poly(isoprène-b-éthylène) est aussi décrite par polymérisation anionique subséquente d'isoprène et d'éthylène dans Makromol. Chem. , Rapid Commun. 13, 135 (1982). Comme le même système de polymérisation est utilisé dans la synthèse de chacun des blocs, le caractère bloc ne peut résulter que d'une alimentation monomère différente entre la synthèse du premier bloc et des blocs suivants.
La voie de synthèse reposant sur la polymérisation subséquente en utilisant le même système de polymérisation peut conduire aussi à un polymère dibloc dans lequel les deux blocs ne sont pas reliés entre eux directement, mais par un segment de chaîne qui est constituée à la fois des unités monomères du premier bloc et des unités monomères du deuxième bloc. La formation de ce segment de chaîne résulte de la mise en présence du monomère utile à la formation du deuxième bloc dans le milieu de polymérisation alors même que le milieu de polymérisation contient encore le monomère utile à la formation du premier bloc.

Une autre voie repose sur l'utilisation de deux systèmes de polymérisation différents pour la synthèse du premier bloc et du bloc suivant. Typiquement, la première étape consiste à former une chaîne du premier polymère, à la modifier de façon à ce qu'elle puisse amorcer la polymérisation subséquente en vue de synthétiser le bloc suivant. Cette voie est par exemple mise en œuvre dans la synthèse de poly(isoprène-b-éthylène) dans Polymer. Vol. 35, 1994, 5024 et dans Eur. Polym. J. 36 (2000), 1175 en synthétisant d'abord un polyisoprène vivant par polymérisation anionique, en modifiant le site anionique propageant du premier bloc polyisoprène en un site apte à propager par polymérisation Ziegler Natta par ajout d'un catalyseur Ziegler. Mais le rendement en polymère bloc est généralement faible, en raison d'une réaction secondaire de réduction qui désactive le site propageant à partir du premier bloc. Une variante consiste à introduire dans la solution contenant le polymère anionique vivant un catalyseur formé d'un métallocène d'un métal de transition et un co-catalyseur, composé à base d'aluminium. Dans cette variante illustrée dans le document KR 100184766 pour synthétiser des polymères blocs d'éthylène et d'isoprène, la présence de chaînes homopolymères d'isoprène s'avère inéluctable et implique des étapes de séparation et de purification du polymère bloc.

Une autre voie possible consiste à préparer séparément les polymères qui constituent chacun des blocs du polymère bloc et à les faire réagir entre eux pour former le polymère bloc. Cette voie qui peut utiliser le principe de la « chimie clic » ou « click chemistry » est par exemple illustrée dans le document WO 2013057083 qui décrit la réaction d'un premier polymère préalablement fonctionnalisé alcyne avec un deuxième polymère préalablement fonctionnalisé azoture. Mais cette voie requiert la modification préalable des polymères par des agents de fonctionnalisation, ce qui induit des étapes supplémentaires dans la synthèse de polymères blocs.

La Demanderesse a trouvé un nouveau procédé qui permet de résoudre les problèmes mentionnés. Le procédé conforme à l'invention qui repose sur l'utilisation de systèmes de polymérisation différents pour la synthèse de chacun des blocs, rend possible la synthèse de polymère blocs avec un haut rendement. Par ailleurs, sa mise en œuvre est simple, car elle requiert le seul ajout d'un métallocène et d'un éventuel monomère au milieu de polymérisation du premier bloc. Il donne aussi accès à de nouveaux polymères blocs qui présentent une microstructure originale en raison du choix des systèmes de polymérisation utilisés pour la synthèse de chacun des blocs.

L'invention concerne donc un procédé de synthèse d'un polymère bloc qui comprend un premier bloc et un deuxième bloc, lequel procédé comprend les étapes suivantes :

a) la réaction d'un métallocène de terre rare et d'un polymère anionique vivant d'un premier monomère,
b) la polymérisation d'un deuxième monomère en présence du produit de réaction de l'étape a),

> le premier monomère étant choisi dans le groupe des monomères constitué par les 1,3-diènes, les $\alpha$-monoléfines aromatiques et leurs mélanges,
> le deuxième monomère étant une monooléfine ou un mélange d'une monooléfine et d'un 1,3-diène,
> l'a-monoléfine aromatique étant de formule $CH_2$=CH-Ar, Ar représentant un groupe aromatique, substitué ou non.

## I. DESCRIPTION DETAILLEE DE L'INVENTION

Tout intervalle de valeurs désigné par l'expression "entre a et b" représente le domaine de valeurs supérieur

à "a" et inférieur à "b" (c'est-à-dire bornes a et b exclues) tandis que tout intervalle de valeurs désigné par l'expression "de a à b" signifie le domaine de valeurs allant de "a" jusqu'à "b" (c'est-à-dire incluant les bornes strictes a et b).

Les composés mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les monomères.

Le 1,3-diène utile aux besoins de l'invention en tant que premier monomère ou deuxième monomère est préférentiellement le 1,3-butadiène, l'isoprène ou leur mélange. La monooléfine utile aux besoins de l'invention en tant que deuxième monomère est préférentiellement l'éthylène, une α-monoléfine aliphatique, une α-monoléfine aromatique ou leurs mélanges. L'a-monoléfine aliphatique est un alcène ayant de préférence 3 à 18 atomes de carbone tel que le propène, le 1-butène, le 1-hexène, le 1-octène, le 1-hexadécène ou leurs mélanges. L'a-monoléfine aromatique est une α-monoléfine de formule $CH_2$=CH-Ar, Ar représentant un groupe aromatique, substitué ou non. Le groupe Ar est de préférence phényle ou aryle. L'a-monoléfine aromatique utile aux besoins de l'invention en tant que premier ou deuxième monomère est préférentiellement le styrène ou un styrène substitué par un ou plusieurs groupes alkyles, plus préférentiellement le styrène.

Le procédé conforme à l'invention a pour caractéristique essentielle de former le deuxième bloc du polymère bloc par polymérisation subséquente après avoir préparé au préalable un polymère anionique vivant. Au terme du procédé, le polymère anionique vivant fait partie intégrante du polymère bloc sous la forme du premier bloc du polymère bloc. Pour la mise en œuvre du procédé, le polymère anionique vivant est utile aux besoins de l'invention en tant qu'agent d'alkylation du métallocène pour activer le métallocène vis-à-vis de la polymérisation du deuxième monomère. L'étape a) est une réaction d'alkylation du métallocène par le polymère anionique vivant. De préférence, le rapport entre le nombre de moles de polymère vivant et le nombre de mole d'atomes de terre rare dans le métallocène varie dans un domaine allant de 0.8 à 1.2.

L'agent d'alkylation étant le polymère anionique vivant, l'ajout d'un agent d'alkylation d'une autre nature tel qu'un composé ayant une liaison carbone-métal, notamment C-Al ou C-Mg, est inutile dans le procédé conforme à l'invention. En effet, l'ajout d'un tel composé comme par exemple un trialkylaluminium ou un dialkylmagnésium aurait pour conséquence de diminuer le rendement en polymère bloc et de favoriser la présence d'homopolymère. Selon l'un quelconque des modes de réalisation de l'invention, le milieu de polymérisation du deuxième monomère est dépourvu préférentiellement de composé ayant une liaison C-Al ou C-Mg.

Le polymère anionique vivant est typiquement une chaîne polymère portant un carbanion. Il résulte généralement des réactions d'amorçage et de propagation d'une chaîne polymère dans la polymérisation anionique d'un premier monomère. Le premier monomère est choisi dans le groupe des monomères constitué par les 1,3-diènes, les α-monoléfines aromatiques et leurs mélanges. Ces monomères sont bien connus pour polymériser ou copolymériser ensemble par voie anionique et pour former des chaînes polymères ou copolymères vivantes. Les procédés de polymérisation de ces monomères sont aussi bien connus et largement décrits.

Le polymère anionique vivant est donc obtenu de façon conventionnelle par polymérisation anionique du premier monomère dans un solvant, dit solvant de polymérisation. Le solvant de polymérisation peut être tout solvant hydrocarboné connu pour être utilisé dans la polymérisation de monomères 1,3-diènes et α-monoléfines aromatiques. De préférence, le solvant de polymérisation est le cyclohexane, le méthylcyclohexane ou le toluène.

Le solvant de polymérisation du premier monomère peut comprendre un additif pour contrôler la microstructure de la chaîne polymère et la vitesse de la réaction de polymérisation. Cet additif peut être un agent polaire tel qu'un éther ou une amine tertiaire, de préférence une amine tertiaire, de manière plus préférentielle une amine tertiaire dite chélalante comme la N,N,N',N'-tétraméthyléthylènediamine. L'additif est le plus souvent utilisé en faible quantité, notamment pour limiter les réactions de désactivation des sites propageants de la polymérisation anionique. La quantité d'additif dans le solvant de polymérisation, traditionnellement indexée sur le nombre de liaison carbone-métal dans le milieu de polymérisation, est réglée selon la microstructure souhaitée de la chaîne polymère et dépend donc du pouvoir complexant de l'additif. L'additif, notamment la N,N,N',N'-tétraméthyléthylènediamine, est préférentiellement utilisé à un taux d'au plus 1 équivalent de liaison carbone-métal, plus préférentiellement à un taux de 0,01 à 0,5 équivalent de liaison carbone-métal.

Le ratio entre la quantité de solvant et la quantité de premier monomère utile à la formation du polymère vivant est choisi par l'homme du métier selon la viscosité souhaitée de la solution polymère vivant. Cette viscosité dépend non seulement de la concentration de la solution polymère, mais aussi de nombreux autres facteurs comme la longueur des chaînes polymères, la nature du contre-ion du polymère vivant, les interactions intermoléculaires entre les chaînes polymères vivantes, le pouvoir complexant du solvant, la température de la solution polymère. Par conséquent, l'homme du métier ajuste la quantité de solvant au cas par cas.

Dans la réaction d'amorçage de la réaction de polymérisation est utilisé un composé connu comme amorceur de la polymérisation anionique des monomères utiles aux besoins de l'invention. De préférence, l'amorceur est un composé qui présente une liaison carbone-métal. L'amorceur est utilisé à un taux choisi en fonction de la longueur de chaîne souhaitée du polymère vivant et peut donc varier dans une large mesure.

De préférence, le polymère vivant est préparé par polymérisation du premier monomère amorcée par un amorceur qui est un composé lithié. A titre d'amorceur lithié, on peut citer les organolithiens, comme les n-butyllithium, le sec-butyllithium et le tert-butyllithium communément utilisés dans la polymérisation anionique des monomères utiles aux besoins de l'invention.

La température de polymérisation pour former le polymère vivant peut varier dans une large mesure. Elle est choisie en fonction notamment de la stabilité de la liaison carbone-métal dans le solvant de polymérisation, des coefficients de vitesse relatifs de la réaction d'amorçage et de la réaction de propagation, de la microstructure visée du polymère vivant. Traditionnellement, elle varie dans un domaine allant de -20 à 100°C, préférentiellement de 20 à 70°C.

De préférence, le polymère anionique vivant est un polymère vivant obtenu par polymérisation du 1,3-butadiène, de l'isoprène, du styrène ou de leurs mélanges. Autrement dit, le premier monomère est préférentiellement le 1,3-butadiène, l'isoprène, le styrène ou leurs mélanges.

Le polymère anionique vivant peut être un homopolymère ou bien un copolymère dans le cas où le premier monomère est un mélange de monomères. Le copolymère peut être statistique ou bloc, puisque l'incorporation des co-monomères peut être contrôlée avec des conditions opératoires connues des procédés de polymérisation anionique. Par exemple, il est connu que la polarité du solvant de polarisation et le mode d'alimentation des co-monomères dans le milieu de polymérisation anionique influencent l'incorporation relative des co-monomères.

Le deuxième monomère dont la polymérisation en présence du produit de réaction de l'étape a) conduit à la formation du deuxième bloc et à la formation du polymère bloc est préférentiellement l'éthylène ou un mélange d'éthylène et de 1,3-butadiène. Le choix particulier d'un mélange d'éthylène et de 1,3-butadiène peut conduire à des structures originales, notamment cycliques à 6 membres comme celles décrites dans le document WO 200754224.

La quantité du deuxième monomère utile aux besoins de l'invention est choisie en fonction de la proportion massique souhaitée du deuxième bloc dans le polymère bloc. L'application envisagée du polymère bloc détermine généralement sa structure chimique, notamment la proportion massique relative du premier bloc et du deuxième bloc. Il s'ensuit que la quantité du deuxième monomère peut varier dans une large mesure.

Le métallocène utile aux besoins de l'invention dans l'étape a) est un métallocène de terre rare. On rappelle que les terres rares sont des métaux et désignent les éléments scandium, yttrium et les lanthanides dont le numéro atomique varie de 57 à 71. La terre rare est préférentiellement un lanthanide, plus préférentiellement le néodyme (Nd).

De préférence, le métallocène de terre rare comporte le motif de formule (Ia) ou (Ib)

$P(Cp^1)(Cp^2)Met$ (Ia)

$(Cp^1)(Cp^2)Met$ (Ib)

Met désignant un atome de métal de terre rare,

$Cp^1$ et $Cp^2$, identiques ou différents, étant choisis dans le groupe constitué par les groupes cyclopentadiényles, les groupes indényles et les groupes fluorényles, les groupes pouvant être substitués ou non,

P étant un groupe pontant les deux groupes $Cp^1$ et $Cp^2$, et comprenant au moins un atome de silicium ou de carbone.

A titre de groupes cyclopentadiényles, fluorényles et indényles substitués, on peut citer ceux substitués par des radicaux alkyles ayant 1 à 6 atomes de carbone ou par des radicaux aryles ayant 6 à 12 atomes de carbone. Le choix des radicaux est aussi orienté par l'accessibilité aux molécules correspondantes que sont les cyclopentadiènes, les fluorènes et indènes substitués, parce que ces derniers sont disponibles commercialement ou facilement synthétisables.

Dans la présente demande, dans le cas du groupe cyclopentadiényle, la position 2 (ou 5) désigne la position de l'atome de carbone qui est adjacent à l'atome de carbone auquel est attaché le pont P, qu'il soit $P^1$ ou $P^2$, comme cela est représenté dans le schéma ci-après.

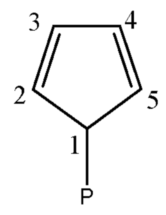

A titre de groupe cyclopentadiényle substitué en position 2 & 5, on peut citer plus particulièrement le groupe tétraméthylcyclopentadiényle.

Dans le cas du groupe indényle, la position 2 désigne la position de l'atome de carbone qui est adjacent à l'atome de carbone auquel est attaché le pont P, qu'il soit $P^1$ ou $P^2$, comme cela est représenté dans le schéma ci-après.

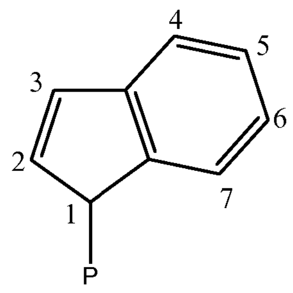

A titre de groupes indényles substitués en position 2, on peut citer plus particulièrement le 2-méthylindényle, le 2-phénylindényle.

A titre de groupes fluorényles substitués, on peut citer plus particulièrement les groupes 2,7-ditertiobutyle-fluorényle et 3,6-ditertiobutyle-fluorényle. Les positions 2, 3, 6 et 7 désignent respectivement la position des atomes de carbone des cycles comme cela est représenté dans le schéma ci-après, la position 9 correspondant à l'atome de carbone auquel est attaché le pont P.

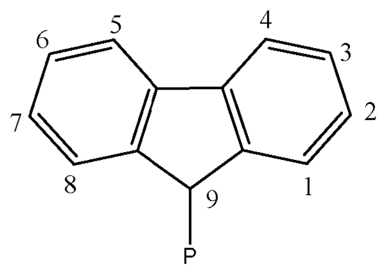

De préférence, $Cp^1$ et $Cp^2$, identiques ou différents, représentent chacun un groupe cyclopentadiényle non substitué, un groupe cyclopentadiényle substitué, un groupe fluorényle non substitué ou un groupe fluorényle substitué. Avantageusement, $Cp^1$ représente un groupe cyclopentadiényle substitué ou non susbstitué et $Cp^2$ représente un groupe fluorényle substitué ou non substitué, de préférence $Cp^1$ représente un groupe cyclopentadiényle non substitué et $Cp^2$ représente un groupe fluorényle non substitué.

Dans la formule (I-a), l'atome Met est relié à une molécule de ligand constitué des deux groupes $Cp^1$ et $Cp^2$ reliés entre eux par le pont $P^1$. De préférence, le symbole $P^1$, désigné sous le terme de pont, répond à la formule $MR^3R^4$, M représentant un atome de silicium ou de carbone, de préférence un atome de silicium, $R^3$ et $R^4$, identiques ou différents, représentant un groupe alkyle comprenant de 1 à 20 atomes de carbone. De manière plus préférentielle, le pont $P^1$ est de formule $SiR^3R^4$, $R^3$ et $R^4$, étant tels que définis précédemment. De manière encore plus préférentielle, $P^1$ répond à la formule $SiMe_2$.

Selon un mode de réalisation préférentiel de l'invention, le métallocène est de formule (II-a) ou (II-b)

$$\{P(Cp^1)(Cp^2)Met\text{-}G\}_b \qquad \text{(II-a)}$$

$$(Cp^1)(Cp^2)MetG \qquad \text{(II-b)}$$

dans lesquelles

- Met représente un atome de métal de terre rare,
- le symbole G désignant un atome d'halogène choisi dans le groupe constitué par le chlore, le fluor, le brome et l'iode, ou un groupe comprenant le motif borohydrure ($BH_4$) ou un motif amidure,
- $Cp^1$, $Cp^2$ et P étant tels que définis précédemment, y compris selon les variantes préférentielles,
- b étant égal à 1 ou 2.

Lorsque G désigne un atome d'halogène, G est préférentiellement un atome de chlore.

Avantageusement, dans la formule (II-a) ou (II-b), $Cp^1$ représente un groupe cyclopentadiényle substitué ou

non susbstitué et $Cp^2$ représente un groupe fluorényle substitué ou non substitué, de préférence $Cp^1$ représente un groupe cyclopentadiényle non substitué et $Cp^2$ représente un groupe fluorényle non substitué.

Que le métallocène soit de formule (I-a), (I-b), (II-a) ou (II-b), le symbole Met représente de préférence un atome de lanthanide (Ln) dont le numéro atomique va de 57 à 71, de manière plus préférentielle un atome de néodyme (Nd).

Selon l'un quelconque des modes de réalisation décrits, le métallocène est de préférence un métallocène borohydrure de lanthanide ou un métallocène halogénure de lanthanide, notamment un métallocène chlorure de lanthanide.

De préférence, le métallocène est de formule (II-a).

Selon un mode de réalisation particulièrement préférentiel de l'invention, le symbole G désigne le chlore ou le groupe de formule (III)

$$(BH_4)_{(1+c)}\text{-}L_c\text{-}N_x \qquad \text{(III)}$$

dans laquelle

- L représente un métal alcalin choisi dans le groupe constitué par le lithium, le sodium et le potassium
- N représente une molécule d'un éther,
- x, nombre entier ou non, est égal ou supérieur à 0,
- c, nombre entier, est égal ou supérieur à 0.

Comme éther convient tout éther qui a le pouvoir de complexer le métal alcalin, notamment le diéthyléther et le tétrahydrofurane.

Comme métallocène utile à l'invention selon l'un quelconque de ses modes de réalisation, on peut citer les métallocènes de formule (IV), (V), (VI), (VII), (VIII), (IX), (X) ou (XI).

$$[Me_2Si(C_5H_4)(C_{13}H_8)NdCl] \qquad \text{(IV)}$$

$$[Me_2Si(C_5H_4)(C_{13}H_8)Nd(BH_4)_2Li(THF)] \qquad \text{(V)}$$

$$[Me_2Si(C_5H_4)(C_{13}H_8)Nd(BH_4)(THF)] \qquad \text{(VI)}$$

$$[Me_2Si(C_{13}H_8)_2NdCl] \qquad \text{(VII)}$$

$$[Me_2Si(C_{13}H_8)_2Nd(BH_4)_2Li(THF)] \qquad \text{(VIII)}$$

$$[Me_2Si(C_{13}H_8)_2Nd(BH_4)(THF)] \qquad \text{(IX)}$$

$$[\{Me_2Si(C_{13}H_8)_2Nd(BH_4)_2Li(THF)\}_{2]} \qquad \text{(X)}$$

$$[Me_2Si(C_{13}H_8)_2Nd(BH_4)] \qquad \text{(XI)}$$

Le métallocène peut se trouver sous la forme de poudre cristallisée on non, ou encore sous la forme de monocristaux. Le métallocène peut se présenter sous une forme monomère ou dimère, ces formes dépendant du mode de préparation du métallocène, comme par exemple cela est décrit dans les demandes WO 2007054223 et WO 2007054224. Le métallocène peut être préparé de façon traditionnelle par un procédé analogue à celui décrit dans les documents EP 1 092 731, WO 2007054223 et WO 2007054224, notamment par réaction dans des conditions inertes et anhydres du sel d'un métal alcalin du ligand avec un sel de terre rare comme un halogénure ou un borohydrure de terre rare, ou un sel d'un métal du groupe 4 dans un solvant adapté, tel un éther, comme le diéthyléther ou le tétrahydrofuranne ou tout autre solvant connu de l'homme de l'art. Après réaction, le métallocène est séparé des sous-produits de réaction par les techniques connues de l'homme de l'art, telles que la filtration ou la précipitation dans un second solvant. Le métallocène est au final séché et isolé sous forme solide.

Typiquement, le procédé est mis en œuvre par l'ajout du métallocène au milieu de polymérisation du premier monomère contenant le polymère anionique vivant. Comme les liaisons carbone-métal présentent dans le milieu de polymérisation du premier monomère sont plutôt sujet à la désactivation en l'absence de monomère à polymériser, l'ajout du métallocène est de préférence effectué au plus tôt après la synthèse du polymère anionique vivant. Comme cela est connu de l'homme du métier, les réactions ainsi que la manipulation des monomères, du métallocène, du polymère anionique vivant, du solvant de polymérisation se font dans des conditions anhydres et sous atmosphère inerte.

La mise en contact du métallocène avec le polymère anionique vivant se fait préférentiellement à une température proche de la température ambiante (23°C), par exemple à température ambiante. Cette mise en contact cause l'activation du métallocène par le polymère anionique vivant. En d'autre terme, le métallocène est rendu actif vis-à-vis de la polymérisation par sa mise en contact avec le polymère anionique vivant. L'introduction du deuxième monomère dans la solution contenant le métallocène activé déclenche la polymérisation subséquente du deuxième monomère. La polymérisation est conduite conformément aux documents EP 1 092 731, WO 2004035639 et WO 2007054224,

Une fois le taux de conversion souhaité atteint de la réaction de polymérisation du deuxième monomère, la réaction de polymérisation est stoppée par un agent de terminaison, comme par exemple un composé ayant un proton acide, tel qu'un alcool. Le polymère bloc peut être récupéré, notamment en le séparant du milieu réactionnel, par exemple en le coagulant dans un solvant provoquant sa coagulation ou en éliminant le solvant de polymérisation et tout monomère résiduel sous pression réduite ou sous l'effet d'un entraînement à la vapeur (opération de stripping).

Le deuxième bloc du polymère bloc peut être un homopolymère ou bien un copolymère dans le cas où le deuxième monomère est un mélange de monomères. Le copolymère peut être statistique ou bloc, selon l'incorporation relative des co-monomères dans le deuxième bloc ou selon le mode d'alimentation des co-monomères dans le milieu de polymérisation, comme par exemple un ajout séquencé de certains co-monomères.

Le procédé conforme à l'invention permet de synthétiser des polymères blocs de 1,3-diènes et d'oléfines avec un haut rendement, typiquement d'au moins 90%, et évite ainsi les étapes de séparation et de purification du polymère bloc. Les hauts rendements en polymères blocs concernent aussi la synthèse de polymères blocs dont chacun des blocs a une masse molaire moyenne en nombre supérieures à 5000 g/mol.

Un autre avantage du procédé sur les procédés de l'état de la technique est sa capacité à préparer des polymères bloc de microstructure originale. En effet, le premier bloc et le deuxième bloc étant synthétisés par des systèmes de polymérisation différents, le procédé permet de combiner des microstructures accessibles par polymérisation anionique et des microstructures accessibles par polymérisation catalysée en présence d'un métallocène. En particulier, une large gamme de température de transition vitreuse peut être atteinte pour le premier bloc tandis qu'une palette de cristallinité du deuxième bloc est aussi possible.

Par ailleurs, la proportion relative des blocs dans le polymère bloc peut varier dans une large mesure. Le premier bloc peut par exemple représenter de 0.1 à 99.9% en masse du polymère bloc.

Le procédé conforme à l'invention donne accès à une grande diversité de microstructures possibles de polymères blocs. Il donne aussi la possibilité de synthétiser des polymères dans lesquels le premier bloc et le deuxième bloc sont liés de préférence directement l'un à l'autre. Autrement dit, le premier bloc est lié préférentiellement de façon covalente au deuxième bloc par un rattachement direct d'un atome de carbone d'une unité monomère du premier bloc à un atome de carbone d'une unité monomère du deuxième bloc.

Le procédé est tout particulièrement adapté pour synthétiser des diblocs, avec les avantages mentionnés ci-dessus. Si le procédé est particulièrement adapté à la préparation de polymère dibloc, il n'est pas limité à la synthèse de polymère dibloc et permet la synthèse de polymères blocs comportant plus de 2 blocs. En effet, dans le procédé de préparation décrit, l'agent d'alkylation peut résulter lui-même de la polymérisation subséquente de charges monomères différentes et dans ce cas il comporte lui-même plusieurs blocs. Par ailleurs, le procédé permet également l'ajout de charges monomères différentes dans l'étape b) qui peut induire alors la formation de bloc de composition différente du deuxième bloc à la suite du deuxième bloc.

L'invention et ses avantages seront aisément compris à la lumière de la description et des exemples de réalisation qui suivent, donnés à titre illustratif et non limitatif.

## II. EXEMPLES DE REALISATION DE L'INVENTION

### 1) Détermination de la température de transition vitreuse des polymères :

La température de transition vitreuse est mesurée au moyen d'un calorimètre différentiel ("Differential Scanning Calorimeter") selon la norme ASTM D3418 (1999).

### 2) Détermination de la température de fusion des polymères :

La température de fusion est mesurée au moyen d'un calorimètre différentiel ("Differential Scanning Calorimeter") selon le mode opératoire suivant : sous atmosphère d'hélium, première montée en température de l'ambiante à 100°C, trempe jusqu'à -150°C, deuxième montée en température de -150C à 200°C selon une rampe de 20°C/min.

Echantillon porté de 25 à -150°C

- Isotherme à -150°C pendant 5 minutes
- chauffage de -150 à +200°C ; à 20°C/min

- Isotherme à +200°C pendant 5 minutes
- Refroidissement de +200 à -150°C ; à 20°C/min
- Isotherme à -150°C pendant 5 minutes
- Chauffage de -150 à +200°C, à 20°C/min

3) Analyse des polymères par résonance magnétique nucléaire (RMN) :

Les spectres sont acquis sur un spectromètre BRUKER AV600. Les échantillons sont solubilisés dans le 1,2-dichlorobenzène d4. La calibration est réalisée sur l'impureté protonnée du 1,2-dichlorobenzène à 7.20 ppm en RMN 1H.

3-1) Détermination de la microstructure des polymères :

La détermination de la microstructure du polymère est réalisée par une analyse RMN.

L'expérience RMN 1H quantitative, utilise une séquence simple impulsion 30° et un délai de répétition de 5 secondes entre chaque acquisition. 64 à 256 accumulations sont réalisées. Les expériences bidimensionnelles 1H/13C sont utilisées dans le but de déterminer la structure des unités des polymères.

Les spectres RMN 1H et le spectre de corrélation RMN 2D $^{1}H/^{13}C$ $^{1}J$ HSQC édité permettent de déterminer la microstructure du polymère bloc et la proportion de chaque bloc dans l'échantillon.

3-2) Détermination du pourcentage de polymère bloc par DOSY :

L'expérience DOSY, méthode RMN, permet d'analyser des mélanges complexes et la détection de traces. Le but de cette expérience est de démontrer que le polymère bloc représente l'essentiel de l'échantillon et que la présence d'homopolymère est très faible.

L'analyse par RMN DOSY permet de séparer les espèces présentes, notamment des matrices polymères, par analyse de leur coefficient de diffusion en solution. Le principe de la technique est le suivant :
L'expérience DOSY consiste à enregistrer des spectres protons en faisant varier la force G des gradients appliquée et ainsi, la force de diffusion. Une augmentation linéaire de l'intensité des gradients va entrainer une décroissance exponentielle de l'intensité du signal RMN. L'expérience DOSY va donner une carte bidimensionnelle. La 2ème dimension F2 de la DOSY correspond, après traitement par la transformée de Fourier, à la dimension 1H. La 1ère dimension F1 correspond à la décroissance du signal RMN en fonction de la force gradient appliquée. Apres traitement de la dimension F2, on extrait le coefficient de diffusion à partir de l'équation (1), et on obtient une carte DOSY.

$$I=I0.\exp(-D\gamma^2 G^2 \delta^2 (\Delta-\delta/3)) \quad (1)$$

Si les deux matrices ont un coefficient de diffusion identique, cela signifie que les deux matrices ont le même rayon hydrodynamique, et sont donc greffées. En revanche, si les deux matrices présentes deux coefficients de diffusion différents, cela signifie qu'elles sont libres l'une de l'autre.
L'équation qui décrit le coefficient de diffusion est la suivante :

$$D = \frac{k_B T}{6\pi\eta r_S}$$

L'expérience a été conduit sur des échantillons de poly(butadiène-b-éthylène) synthétisé selon le procédé conforme à l'invention. L'analyse a été réalisée à 115°C dans le 1,2-dichlorobenzene. Les résultats obtenus par analyse DOSY sont les suivants, les pourcentages étant des pourcentages molaires : 6.1% d'unité 1,2; 41.6% d'unité 1,4, 52.3% d'unité éthylène.

4) Préparation des polymères :

Le toluène et le 1,3-butadiène ont été épurés sur garde d'alumine. Le butyllithium provient de chez Aldrich (1,4 mol.$L^{-1}$) dans l'hexane et a été utilisé sans purification supplémentaire. Les métallocènes $[Me_2SiFlu_2Nd(BH_4)_2Li(THF)]_2$ et $[Me_2SiCpFLuNd(BH_4)_2Li(THF)]_2$ ont été préparés selon le protocole décrit dans la demande de brevet FR2893028 et FR 2893029. La N,N,N',N'-tétraméthyléthylènediamine (TMEDA) provient de chez Aldrich et est épurée sur garde d'alumine et conservée sous atmosphère inerte.

Les polymères blocs sont préparés selon le mode opératoire décrit ci-après. Les conditions opératoires propres

à chaque synthèse figurent dans les tableaux 1 et 2.

A une solution d'un premier monomère (M1) dans le toluène (100 mL) préparé dans une bouteille Steinie inertée à l'azote est additionnée une solution de butyllithium à 0,19 mol/L dans le toluène (0,5 ml) contenant le cas échéant la N,N,N',N'-tétraméthyléthylènediamine (TMEDA). Le milieu réactionnel est ensuite agité à 60°C pendant 1h30 sauf indication contraire. Après ce temps écoulé, temps pendant lequel a lieu la polymérisation de M1, la solution de polymère anionique vivant obtenue est ensuite transvasée à l'aide d'une canule dans une bouteille Steinie inertée à l'argon et contenant le métallocène (1 ou 2). Le mélange réactionnel est agité pendant 5 minutes à température ambiante jusqu'à ce que l'ensemble du métallocène soit alkylé et passe en solution. Le deuxième monomère (M2) est ensuite introduit selon une quantité de 1 g dans le milieu réactionnel. Le milieu réactionnel est agité pendant 2h à 60°C. Au terme de la réaction, le milieu réactionnel est dépressurisé et 1mL d'éthanol est ajouté pour stopper la réaction de polymérisation. 0,2 ml d'une solution de Santoflex 13 dans le toluène (100g/L) sont ajoutés et la solution de polymère est placée sous vide partiel et balayage d'azote pendant 24h à 60°C.

Le métallocène 1 est $[Me_2SiFlu_2Nd(BH_4)_2Li(THF)]_2$ ; le métallocène 2 est $[Me_2SiCpFLuNd(BH_4)_2Li(THF)]_2$.

Le deuxième monomère (M2) est l'éthylène (E) ou un mélange (E/B) de 80% en mole d'éthylène et 20% en mole de 1,3-butadiène.

Cinq séries d'essais, série 1 à 5, sont conduits selon le monomère M1 utilisé pour la synthèse du premier bloc et selon la microstructure du premier bloc. Les conditions de synthèse du premier bloc figurent dans le tableau 1 pour chacune des séries. Le tableau 1 indique également la température de transition vitreuse (« Tg polymère 1er bloc ») d'un polymère obtenu dans les mêmes conditions opératoires que la synthèse du premier bloc du polymère bloc pour chaque série.

Les conditions de synthèse du deuxième bloc figurent dans le tableau 2.

Dans une même série d'essais, les conditions de synthèse du deuxième bloc diffèrent d'un essai à l'autre et sont indiquées dans le tableau 2. Chaque essai est numéroté avec une référence faite à la série à laquelle il appartient. Par exemple, l'essai 1-1 est l'essai n°1 de la série 1, ce qui signifie que les conditions de synthèse du premier bloc sont celles de la série 1 indiquées dans le tableau 1 et que les conditions de synthèse du deuxième bloc qui sont propres à cet essai n°1 de la série 1 sont décrites dans le tableau 2.

Pour l'essai 1-2, le temps d'agitation à 60°C pendant lequel a lieu la polymérisation de M1 est de 1h10 au lieu de 1h30.

Les caractéristiques des polymères blocs résultant des essais figurent aussi dans le tableau 2.

Dans le tableau 2, l'écriture (X1)-(X2) équivaut à la dénomination poly(X1-b-X2) : (X1) et (X2) désignant des polymères blocs résultant de la polymérisation respective d'un monomère X1 et d'un monomère X2, alors que l'écriture (X1X2) désigne un copolymère statistique de X1 et de X2. B est utilisé pour le monomère 1,3-butadiène ; I pour isoprène, S pour styrène, E pour éthylène.

Pour illustrer cette convention d'écriture, suivent ci-après quelques exemples :

(B)-(E) équivaut à la dénomination poly(butadiène-b-éthylène) ;

(B)-(EB) est utilisé pour désigner un polymère bloc dont le premier bloc est un polybutadiène (B) et le deuxième bloc est un copolymère statistique de 1,3-butadiène et d'éthylène (EB).

(B)-(EB)-(E) désigne un polymère bloc dont le premier bloc est un polybutadiène (B), le deuxième bloc est formé de deux blocs, l'un est un copolymère statistique de 1,3-butadiène et d'éthylène (EB) et l'autre un polyéthylène (E).

Tableau 1

| | Série 1 | Série 2 | Série 3 | Série 4 | Série 5 |
|---|---|---|---|---|---|
| M1 | 1,3-butadiène 1,4 mL | 1,3-butadiène 1,4 mL | Styrène 1 mL | Isoprène 1.5 mL | 1,3-butadiène/styrène 1.4 mL/0.1 mL |
| BuLi | 0.50 mL (95 μmol) | 0.50 mL (95 μmol) | 0.50 mL (95 μmol) | 0.50 mL (95 μmol) | 0.50 mL (95 μmol) |
| Additif | - | TMEDA 48 μlmol | - | - | - |
| « Tg polymère 1er bloc » | -94°C | -70°C | 44°C | -62°C | -88°C |

Tableau 2

| Série-essa i | Métallocène (90 µmol) | M2 | Polymère bloc | % 1er bloc | Tg 1er bloc | Tg 2ème bloc | Tf 2ème bloc |
|---|---|---|---|---|---|---|---|
| 1-1 | 1 | E | (B)-(E) | 60 | -94°C | | 127°C |
| 1-2 | 1 | E | (B)-(EB)-(E) | 39 | -92°C | -37°C | 121°C |
| 1-3 | 1 | E/B | (B)-(EB) | 50 | -92°C | -37°C | Phénomène endothermique étalé de -35°C à -20°C |
| 1-4 | 2 | E/B | (B)-(EB) | 55 | -92°C | -21°C | 52-120°C |
| 2-1 | 1 | E | (B)-(E) | 60 | -70°C | - | 127°C |
| 3-1 | 1 | E | (S)-(E) | 58 | 44°C | - | 131°C |
| 3-2 | 1 | E/B | (S)-(EB) | 49 | 44°C | -34°C | Phénomène endothermique étalé de -30°C à -20°C |
| 3-3 | 2 | E/B | (S)-(EB) | 52 | | | -15 à 140°C |
| 4-1 | 1 | E | (I)-(E) | 58 | -62°C | | 124°C |
| 4-2 | 1 | E/B | (I)-(EB) | 49 | -62°C | -44°C | Phénomène endothermique étalé de -35°C à -20°C |
| 5-1 | 1 | E | (SBR)-(E) | 60 | -88°C | | 128°C |

**Revendications**

1. Procédé de synthèse d'un polymère bloc qui comprend un premier bloc et un deuxième bloc, lequel procédé comprend les étapes suivantes :

   a) La réaction d'un métallocène de terre rare et d'un polymère anionique vivant d'un premier monomère,
   b) la polymérisation d'un deuxième monomère en présence du produit de réaction de l'étape a),

   le premier monomère étant choisi dans le groupe des monomères constitué par les 1,3-diènes, les α-monoléfines aromatiques et leurs mélanges,
   le deuxième monomère étant une monooléfine ou un mélange d'une monooléfine et d'un 1,3-diène,
   l'a-monoléfine aromatique étant de formule $CH_2$=CH-Ar, Ar représentant un groupe aromatique, substitué ou non.

2. Procédé selon la revendication 1 dans lequel le 1,3-diène est le 1,3-butadiène, l'isoprène ou leur mélange.

3. Procédé selon l'une quelconque des revendications 1 à 2 dans lequel la monooléfine est l'éthylène, une α-monoléfine aliphatique, une α-monoléfine aromatique ou leurs mélanges.

4. Procédé selon l'une quelconque des revendications 1 à 3 dans lequel l'a-monoléfine aromatique est le styrène ou un styrène substitué par un ou plusieurs groupes alkyles, de préférence le styrène.

5. Procédé selon l'une quelconque des revendications 1 à 4 dans lequel le polymère anionique vivant est un polymère vivant obtenu par polymérisation du 1,3-butadiène, de l'isoprène, du styrène ou de leurs mélanges.

6. Procédé selon l'une quelconque des revendications 1 à 5 dans lequel le polymère anionique vivant est préparé par polymérisation du premier monomère amorcée par un composé lithié, de préférence organolithien.

7. Procédé selon l'une quelconque des revendications 1 à 6 dans lequel le deuxième monomère est l'éthylène ou un mélange d'éthylène et de 1,3-butadiène.

8. Procédé selon l'une quelconque des revendications 1 à 7 dans lequel le rapport entre le nombre de moles de polymère vivant et le nombre de mole d'atomes de terre rare dans le métallocène varie dans un domaine allant de

0.8 à 1.2.

**9.** Procédé selon l'une quelconque des revendications 1 à 8 dans lequel le métallocène de terre rare comporte le motif de formule (Ia) ou (Ib)

$$P(Cp^1)(Cp^2)Met \qquad (Ia)$$

$$(Cp^1)(Cp^2)Met \qquad (Ib)$$

Met désignant un atome de métal de terre rare,
$Cp^1$ et $Cp^2$, identiques ou différents, étant choisis dans le groupe constitué par les groupes cyclopentadiényles, les groupes indényles et les groupes fluorényles, les groupes pouvant être substitués ou non,
P étant un groupe pontant les deux groupes $Cp^1$ et $Cp^2$, et comprenant au moins un atome de silicium ou de carbone.

**10.** Procédé selon l'une quelconque des revendications 1 à 9 dans lequel le métallocène de terre rare est de formule (IIa) ou (IIb)

$$\{P(Cp^1)(Cp^2)Met\text{-}G\}_b \qquad (IIa)$$

$$(Cp^1)(Cp^2)MetG \qquad (IIb)$$

le symbole G désignant un atome d'halogène choisi dans le groupe constitué par le chlore, le fluor, le brome et l'iode ou désignant un groupe comprenant un motif borohydrure ou un motif amidure,
b est égal à 1 ou 2Met désignant un atome de métal de terre rare,
$Cp^1$ et $Cp^2$, identiques ou différents, étant choisis dans le groupe constitué par les groupes cyclopentadiényles, les groupes indényles et les groupes fluorényles, les groupes pouvant être substitués ou non,
P étant un groupe pontant les deux groupes $Cp^1$ et $Cp^2$, et comprenant au moins un atome de silicium ou de carbone.

**11.** Procédé selon la revendication 10 dans lequel le symbole G désigne le chlore ou le groupe de formule (III)

$$(BH_4)_{(1+c)}\text{-}L_c\text{-}N_x \qquad (III)$$

dans laquelle

- L représente un métal alcalin choisi dans le groupe constitué par le lithium, le sodium et le potassium
- N représente une molécule d'un éther,
- x, nombre entier ou non, est égal ou supérieur à 0,
- c, nombre entier, est égal ou supérieur à 0.

**12.** Procédé selon l'une quelconque des revendications 9 à 11 dans lequel P désigne le groupe $SiMe_2$.

**13.** Procédé selon l'une quelconque des revendications 9 à 12 dans lequel $Cp^1$ et $Cp^2$, identiques ou différents, représentent chacun un groupe cyclopentadiényle non substitué, un groupe cyclopentadiényle substitué, un groupe fluorényle non substitué ou un groupe fluorényle substitué.

**14.** Procédé selon l'une quelconque des revendications 9 à 13 dans lequel le métallocène de terre rare est de formule (IIa).

**15.** Procédé selon l'une quelconque des revendications 1 à 14 dans lequel la terre rare est un lanthanide, de préférence le néodyme.

## Patentansprüche

**1.** Verfahren zur Synthese eines Blockpolymers, das einen ersten Block und einen zweiten Block umfasst, wobei das Verfahren die folgenden Schritte umfasst:

a) die Umsetzung eines Seltenerdmetall-Matallocens und eines lebenden anionischen Polymers eines ersten Monomers,
b) die Polymerisation eines zweiten Monomers in Gegenwart des Umsetzungsprodukts aus Schritt a),

wobei das erste Monomer aus der Gruppe von Monomeren bestehend aus 1,3-Dienen, aromatischen α-Monoolefinen und Mischungen davon ausgewählt wird,
wobei es sich bei dem zweiten Monomer um ein Monoolefin oder eine Mischung eines Monoolefins und eines 1,3-Diens handelt,
wobei das aromatische α-Monoolefin die Formel $CH_2$=CH-Ar aufweist, wobei Ar für eine substituierte oder unsubstituierte aromatische Gruppe steht.

**2.** Verfahren nach Anspruch 1, wobei es sich bei dem 1,3-Dien um 1,3-Butadien, Isopren oder eine Mischung davon handelt.

**3.** Verfahren nach einem der Ansprüche 1 bis 2, wobei es sich bei dem Monoolefin um Ethylen, ein aliphatisches α-Monoolefin, ein aromatisches α-Monoolefin oder Mischungen davon handelt.

**4.** Verfahren nach einem der Ansprüche 1 bis 3, wobei es sich bei dem aromatischen α-Monoolefin um Styrol oder ein durch eine oder mehrere Alkylgruppen substituiertes Styrol, vorzugsweise Styrol, handelt.

**5.** Verfahren nach einem der Ansprüche 1 bis 4, wobei es sich bei dem lebenden anionischen Polymer um ein durch Polymerisation von 1,3-Butadien, Isopren, Styrol oder Mischungen davon erhaltenes lebendes Polymer handelt.

**6.** Verfahren nach einem der Ansprüche 1 bis 5, wobei das lebende anionische Polymer durch Polymerisation des ersten Monomers, die mit einer Lithiumverbindung, vorzugsweise einer Organolithiumverbindung, initiiert wird, hergestellt wird.

**7.** Verfahren nach einem der Ansprüche 1 bis 6, wobei es sich bei dem zweiten Monomer um Ethylen oder eine Mischung von Ethylen und 1,3-Butadien handelt.

**8.** Verfahren nach einem der Ansprüche 1 bis 7, wobei das Verhältnis zwischen der Zahl der Mole des lebenden Polymers und der Zahl der Mole der Seltenerdmetallatome in dem Metallocen in einem Bereich von 0,8 bis 1,2 variiert.

**9.** Verfahren nach einem der Ansprüche 1 bis 8, wobei das Seltenerdmetall-Matallocen die Einheit der Formel (Ia) oder (Ib) umfasst:

$$P(Cp^1)(Cp^2)Met \qquad (Ia)$$

$$(Cp^1)(Cp^2)Met \qquad (Ib),$$

wobei Met für ein Seltenerdmetallatom steht,
wobei $Cp^1$ und $Cp^2$ gleich oder verschieden sind und aus der Gruppe bestehend aus Cyclopentadienylgruppen, Indenylgruppen und Fluorenylgruppen ausgewählt sind, wobei die Gruppen substituiert oder unsubstituiert sein können,
wobei P eine Gruppe, die $Cp^1$ und $Cp^2$ verbrückt, ist und mindestens ein Silicium- oder Kohlenstoffatom umfasst.

**10.** Verfahren nach einem der Ansprüche 1 bis 9, wobei das Seltenerdmetall-Matallocen die Formel (IIa) oder (IIb) aufweist:

$$\{P(Cp^1)(Cp^2)Met\text{-}G\}_b \qquad (IIa)$$

$$(Cp^1)(Cp^2)MetG \qquad (IIb),$$

wobei das Symbol G für ein Halogenatom, das aus der Gruppe bestehend aus Chlor, Fluor, Brom und Iod ausgewählt ist, oder eine Gruppe mit einer Borhydrid-Einheit oder einer Amid-Einheit ausgewählt ist, steht,
b gleich 1 oder 2 ist,
wobei Met für ein Seltenerdmetallatom steht,
wobei $Cp^1$ und $Cp^2$ gleich oder verschieden sind und aus der Gruppe bestehend aus Cyclopentadienylgruppen,

Indenylgruppen und Fluorenylgruppen ausgewählt sind, wobei die Gruppen substituiert oder unsubstituiert sein können,
wobei P eine Gruppe, die $Cp^1$ und $Cp^2$ verbrückt, ist und mindestens ein Silicium- oder Kohlenstoffatom umfasst.

**11.** Verfahren nach Anspruch 10, wobei das Symbol G für Chlor oder die Gruppe der Formel (III)

$$(BH_4)_{(1+c)}\text{-}L_c\text{-}N_x \qquad \text{(III)},$$

in der

- L für ein Alkalimetall, das aus der Gruppe bestehend aus Lithium, Natrium und Kalium ausgewählt ist, steht,
- N für ein Molekül eines Ethers steht,
- x ganzzahlig oder nicht ganzzahlig ist und gleich oder größer als 0 ist,
- c ganzzahlig ist und gleich oder größer als 0 ist,

steht.

**12.** Verfahren nach einem der Ansprüche 9 bis 11, wobei P für die $SiMe_2$-Gruppe steht.

**13.** Verfahren nach einem der Ansprüche 9 bis 12, wobei $Cp^1$ und $Cp^2$ gleich oder verschieden sind und jeweils für eine unsubstituierte Cyclopentadienylgruppe, eine substituierte Cyclopentadienylgruppe, eine unsubstituierte Fluorenylgruppe oder eine substituierte Fluorenylgruppe stehen.

**14.** Verfahren nach einem der Ansprüche 9 bis 13, wobei das Seltenerdmetall-Metallocen die Formel (IIa) aufweist.

**15.** Verfahren nach einem der Ansprüche 1 bis 14, wobei es sich bei dem Seltenerdmetall um ein Lanthanid, vorzugsweise Neodym, handelt.

## Claims

**1.** Process for synthesizing a block polymer which comprises a first block and a second block, said process comprising the following steps:

a) reaction of a rare earth metallocene and a living anionic polymer of a first monomer,
b) polymerization of a second monomer in the presence of the reaction product from step a),

the first monomer being selected from the group of monomers consisting of 1,3-dienes, aromatic $\alpha$-monoolefins and mixtures thereof,
the second monomer being a monoolefin or a mixture of a monoolefin and a 1,3-diene,
the aromatic $\alpha$-monoolefin being of the formula $CH_2=CH\text{-}Ar$, Ar representing a substituted or unsubstituted aromatic group.

**2.** Process according to Claim 1, wherein the 1,3-diene is 1,3-butadiene, isoprene, or a mixture thereof.

**3.** Process according to any one of Claims 1 to 2, wherein the monoolefin is ethylene, an aliphatic $\alpha$-monoolefin, an aromatic $\alpha$-monoolefin, or mixtures thereof.

**4.** Process according to any one of Claims 1 to 3, wherein the aromatic $\alpha$-monoolefin is styrene or a styrene substituted by one or more alkyl groups, preferably styrene.

**5.** Process according to any one of Claims 1 to 4, wherein the living anionic polymer is a living polymer obtained by polymerization of 1,3-butadiene, of isoprene, of styrene or of mixtures thereof.

**6.** Process according to any one of Claims 1 to 5, wherein the living anionic polymer is prepared by polymerization of the first monomer initiated by a lithium compound, preferably organolithium compound.

**7.** Process according to any one of Claims 1 to 6, wherein the second monomer is ethylene or a mixture of ethylene

and 1,3-butadiene.

**8.** Process according to any one of Claims 1 to 7, wherein the ratio between the number of moles of living polymer and the number of moles of rare earth atoms in the metallocene varies within a range extending from 0.8 to 1.2.

**9.** Process according to any one of Claims 1 to 8, wherein the rare earth metallocene includes the unit of formula (Ia) or (Ib)

$$P(Cp^1)(Cp^2)Met \qquad (Ia)$$

$$(Cp^1)(Cp^2)Met \qquad (Ib)$$

Met denoting a rare earth metal atom,
$Cp^1$ and $Cp^2$, which may be identical or different, being selected from the group consisting of cyclopentadienyl groups, indenyl groups and fluorenyl groups, it being possible for the groups to be substituted or unsubstituted,
P being a group that bridges the two groups $Cp^1$ and $Cp^2$ and that comprises at least one silicon or carbon atom.

**10.** Process according to any one of Claims 1 to 9, wherein the rare earth metallocene is of formula (IIa) or (IIb)

$$\{P(Cp^1)(Cp^2)Met\text{-}G\}_b \qquad (IIa)$$

$$(Cp^1)(Cp^2)MetG \qquad (IIb)$$

the symbol G denoting a halogen atom selected from the group consisting of chlorine, fluorine, bromine and iodine or denoting a group comprising a borohydride unit or an amide unit,
b is equal to 1 or 2, Met denoting a rare earth metal atom,
$Cp^1$ and $Cp^2$, which may be identical or different, being selected from the group consisting of cyclopentadienyl groups, indenyl groups and fluorenyl groups, it being possible for the groups to be substituted or unsubstituted,
P being a group that bridges the two groups $Cp^1$ and $Cp^2$ and that comprises at least one silicon or carbon atom.

**11.** Process according to Claim 10, wherein the symbol G denotes chlorine or the group of formula (III)

$$(BH_4)_{(1+c)}\text{-}L_c\text{-}N_x \qquad (III)$$

in which

- L represents an alkali metal selected from the group consisting of lithium, sodium and potassium,
- N represents a molecule of an ether,
- x, which may or may not be an integer, is equal to or greater than 0,
- c, which is an integer, is equal to or greater than 0.

**12.** Process according to any one of Claims 9 to 11, wherein P denotes an $SiMe_2$ group.

**13.** Process according to any one of Claims 9 to 12, wherein $Cp^1$ and $Cp^2$, which may be identical or different, each represent an unsubstituted cyclopentadienyl group, a substituted cyclopentadienyl group, an unsubstituted fluorenyl group or a substituted fluorenyl group.

**14.** Process according to any one of Claims 9 to 13, wherein the rare earth metallocene is of formula (IIa).

**15.** Process according to any one of Claims 1 to 14, wherein the rare earth is a lanthanide, preferably neodymium.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- EP 2599804 A
- EP 2599809 A
- KR 100184766
- WO 2013057083 A
- WO 200754224 A
- WO 2007054223 A
- WO 2007054224 A
- EP 1092731 A
- WO 2004035639 A
- FR 2893028
- FR 2893029

### Littérature non-brevet citée dans la description

- *Makromol. Chem. , Rapid Commun.,* 1982, vol. 13, 135
- *Polymer,* 1994, vol. 35, 5024
- *Eur. Polym. J.,* 2000, vol. 36, 1175
- Differential Scanning Calorimeter. *ASTM D3418,* 1999